# EUROPÄISCHE PATENTSCHRIFT

(11) **EP 4 216 498 B1**
(45) Veröffentlichungstag und Bekanntmachung des Hinweises auf die Patenterteilung: **17.06.2026**
(21) Anmeldenummer: 22152309.5
(22) Anmeldetag: 19.01.2022
(51) Int. Cl.: H04L 12/46, H04W 76/11, H04W 88/04, H04W 88/06

(54) **VERMITTLUNG ZWISCHEN MEHREREN GERÄTEN IN EINEM FUNKNETZWERK**
COMMUNICATION BETWEEN MULTIPLE DEVICES IN A WIRELESS NETWORK
TRANSMISSION ENTRE PLUSIEURS APPAREILS DANS UN RÉSEAU SANS FIL

(43) Veröffentlichungstag der Anmeldung: 26.07.2023
(73) Patentinhaber: ise Individuelle Software und Elektronik GmbH, 26122 Oldenburg (DE)
(72) Erfinder: Sahm, Christoph, 26131 Oldenburg (DE)
(74) Vertreter: Angerhausen, Christoph

(56) Entgegenhaltungen:
- EP-A1- 3 910 886
- CN-U- 212 365 147
- ANONYMOUS: "Tethering (Netzwerkfreigabe) - Wikipedia - Version vom 2. September 2021", 2 September 2021 (2021-09-02), XP055934353, Retrieved from the Internet <URL:https://de.wikipedia.org/w/index.php?title=Tethering_(Netzwerkfreigabe)&oldid=215268575> [retrieved on 20220622]

## Beschreibung

### TECHNISCHES GEBIET

Die hier offenbarte Erfindung liegt auf dem technischen Gebiet der Vernetzung von Geräten, die mittels Funk miteinander kommunizieren und unter unterschiedlichen technische Bedingungen arbeiten.

### HINTERGRUND

In stationär betriebenen Netzwerken, also Netzwerken mit ortsfesten Geräten, wird üblicherweise ein Betrieb über feste Verbindungen, beispielsweise Ethernet oder Twisted Pair (TP) angestrebt. Dies gilt etwa für Netzwerke zur Gebäudeautomation, die Aktuatoren und Sensoren sowie Schalter und andere Bauteile miteinander verbinden. Zugleich sind solche Geräte vorzugsweise an eine feste Stromversorgung angeschlossen.

Werden derartige Netzwerke jedoch in einem bestehenden Gebäude nachgerüstet oder ergänzt, so müssen Geräte teilweise ohne feste Stromversorgung auskommen und stattdessen mit Batterien betrieben werden. Aus dem gleichen Grund kann es erforderlich sein, dass Geräte nicht über feste Verbindungen kommunizieren können; eine Funkverbindung muss betrieben werden. Die Datenübertragung mittels Funk erfordert einen höheren Stromverbrauch als mittels fester Verbindung. Wird ein Gerät sowohl mit Batterie betrieben als auch mittels Funk an das Netzwerk angeschlossen, werden daher Maßnahmen ergriffen, um Datenübertragungen möglichst effizient vorzunehmen. Beispielsweise können solche Geräte bestimmte Funkkanäle benutzen, die langsamere Frequenzen verwenden als andere über Funk kommunizierende Geräte, die an die Stromversorgung angeschlossen sind.

In bestimmten bekannten Netzwerken sind daher mehrere Funkkanäle vorgesehen. So umfasst etwa der KNX-Standard für Gebäudenetzwerke mehrere schnelle Kanäle (F1, F2 und F3) und langsame Kanäle (S1 und S2). Die schnellen Kanäle sind üblicherweise für Geräte vorgesehen, die an die feste Stromversorgung angeschlossen sind; wenn möglich, betrifft dies Geräte, die unmittelbar durch einen Benutzer bedient werden, wie etwa eine Steuerung für eine Jalousie oder andere Aktuatoren. Langsamere Kanäle werden üblicherweise von Geräten verwendet, die mittels Batterie betrieben sind, also vorzugsweise Sensoren oder andere Geräte, die nicht unbedingt eine unmittelbare Reaktion zu liefern brauchen und vorübergehend auch in einen Stromsparmodus eintreten können.

Im Folgenden wird unter einem Funknetzwerk ein Netzwerk verstanden, dessen Teilnehmer zumindest teilweise mittels Funk kommunizieren. Ein Funknetzwerk kann jedoch auch Teilnehmer umfassen, die drahtgebunden oder sowohl drahtgebunden als auch drahtlos mittels Funk kommunizieren.

Unterschiedliche Funkkanäle im Sinne der Erfindung unterscheiden sich über die Funkfrequenz und/oder der Kodierung auf der gleichen Frequenz, so dass sie nicht kompatibel sind.

Ein Teilnehmer ist ein Gerät innerhalb eines Netzwerks, das eingerichtet ist, mit anderen Geräten in dem Netzwerk zu kommunizieren. Beispiele für Teilnehmer sind Computer, Notebooks, Tablets, Aktuatoren, Sensoren, Router.

Eine Adresse ist ein eindeutiger Bezeichner für ein Gerät in dem Netzwerk oder für eine Anwendung auf einem Gerät in dem Netzwerk oder für mehrere Geräte in dem Netzwerk oder eine Anwendung auf mehreren Geräten in dem Netzwerk. Adressen für mehr als ein Gerät oder mehr als eine Anwendung oder eine Anwendung auf mehreren Geräten werden auch als Gruppenadressen bezeichnet. Gruppenadressen werden in manchen Protokollen auch als Broadcast- oder Multicastadressen bezeichnet.

Eine Zieladresse ist eine Adresse, an die eine Nachricht adressiert ist. Eine Absenderadresse ist eine Adresse, von der eine Nachricht stammt. Ein Ziel oder Zielgerät oder Adressat ist ein in einer Nachricht adressiertes Gerät oder auch eine adressierte Anwendung auf einem Gerät. Ein Absender oder Absendergerät ist ein Gerät oder eine Anwendung, das/die eine Nachricht versendet.

Eine Datenstruktur ist eine Implementation eines Datenmodells, dessen Gestalt von der jeweiligen Ausführungsform abhängt. Die vorliegende Erfindung kann beispielsweise unter Verwendung einer Liste, eines Arrays, eines assoziativen Arrays, eines Objekts, eines Zeigers auf ein Objekt implementiert werden.

Tethering bezeichnet die Verbindung eines Smartphones oder eines anderen mobilen Endgeräts mit einem anderen Gerät, um diesem über das Mobilfunknetz eine Internetverbindung zu ermöglichen. Das Mobiltelefon übernimmt damit die Rolle eines Modems. Diese Funktion wird auch als Internetfreigabe bezeichnet. Die beiden Geräte können drahtgebunden oder drahtlos verbunden werden.

CN 212365147 U offenbart einen drahtlosen Repeater, der Module zum "Gaussian frequency shift keying" (GFSK) und mit "long-distance radio" (LoRa)-Eigenschaften umfasst. Der drahtlose Repeater kommuniziert mittels des GFSK-Modules mit einem Frontend-Knoten und mittels des LoRa-Moduls mit einem drahtlosen Host. Die beiden Module verwenden unterschiedliche Modulationsverfahren auf getrennten Kanälen.

### ZUSAMMENFASSUNG

Ausführungsformen der Erfindung umfassen Verfahren, umfassend: Senden einer Nachricht durch ein erstes Gerät in einem Funknetzwerk auf einem ersten Funkkanal, wobei die Nachricht eine erste Adresse des ersten Geräts und eine zweite Adresse eines zweiten Geräts oder eine Gruppenadresse enthält, wobei das Funknetzwerk nach dem KNX-Protokoll arbeitet; Empfangen der Nachricht durch ein drittes Gerät in dem Funknetzwerk; Auslesen der zweiten Adresse, Prüfen, ob die Nachricht an das dritte Gerät adressiert ist; falls die Nachricht an das dritte Gerät adressiert ist, Verarbeiten der Nachricht durch das dritte Gerät, und, falls die Nachricht nicht an das dritte Gerät adressiert ist, Prüfen anhand einer Datenstruktur, ob das zweite Gerät den ersten Funkkanal unterstützt; falls das zweite Gerät den ersten Funkkanal unterstützt, Ignorieren der Nachricht durch das dritte Gerät, und, falls das zweite Gerät den ersten Funkkanal nicht unterstützt, Auslesen eines zweiten Funkkanals, der in der Datenstruktur der zweiten Adresse zugeordnet ist, und Senden der Nachricht auf dem zweiten Funkkanal, wobei das dritte Gerät sowohl den ersten als auch den zweiten Funkkanal unterstützt.

Ausführungsformen der Erfindung umfassen ferner Systeme, umfassend: ein erstes Gerät, ein zweites Gerät und ein drittes Gerät, die zur Kommunikation in einem Funknetzwerk eingerichtet sind, wobei das Funknetzwerk nach dem KNX-Protokoll arbeitet; wobei das erste Gerät auf einem ersten Funkkanal und das zweite Gerät auf einem zweiten Funkkanal in dem Funknetzwerk kommuniziert und das dritte Gerät eingerichtet ist, sowohl den ersten als auch den zweiten Funkkanal zu verwenden; wobei das erste Gerät eingerichtet ist, eine Nachricht auf dem ersten Funkkanal zu senden, wobei die Nachricht eine erste Adresse des ersten Geräts und eine zweite Adresse des zweiten Geräts enthält; wobei das dritte Gerät eingerichtet ist, die Nachricht zu empfangen, die zweite Adresse auszulesen, zu prüfen, ob die Nachricht an das dritte Gerät adressiert ist, und, falls die Nachricht an das dritte Gerät adressiert ist, die Nachricht zu verarbeiten, und, falls die Nachricht nicht an das dritte Gerät adressiert ist, anhand einer Datenstruktur zu prüfen, ob das zweite Gerät den ersten Funkkanal unterstützt, und, falls das zweite Gerät den ersten Funkkanal unterstützt, die Nachricht zu ignorieren, und, falls das zweite Gerät den ersten Funkkanal nicht unterstützt, den zweiten Funkkanal des zweiten Geräts auszulesen und die Nachricht auf dem zweiten Funkkanal zu senden.

### KURZE BESCHREIBUNG DER FIGUREN

Figur 1 zeigt ein erfindungsgemäßes Verfahren, das auf einem oder mehreren bestimmten Geräten in einem Netzwerk ausgeführt wird und die Kommunikation zweier Geräte miteinander ermöglicht, die auf zwei unterschiedlichen Kanälen kommunizieren.
Figuren 2A und 2A zeigen ein Anwendungsbeispiel des Verfahrens nach Figur 1.
Figur 3 zeigt ein erfindungsgemäßes Verfahren, das auf beliebigen oder allen Geräten in einem Netzwerk ausgeführt wird und die Kommunikation zweier Geräte ermöglicht, die auf zwei unterschiedlichen Kanälen kommunizieren.
Figuren 4A und 4B zeigen ein Anwendungsbeispiel des Verfahrens nach Figur 3.
Figur 5 zeigt ein erfindungsgemäßes Verfahren, das auf beliebigen oder allen Geräten in einem Netzwerk ausgeführt wird und die Kommunikation zweier Geräte ermöglicht, die auf zwei von beliebig vielen unterschiedlichen Kanälen kommunizieren.
Figuren 6A bis 6C zeigen ein Anwendungsbeispiel des Verfahrens nach Figur 5.

### AUSFÜHRLICHE BESCHREIBUNG

In Netzwerken, die wenigstens teilweise auch mittels Funk betrieben werden, versenden Netzwerkgeräte Nachrichten - auch als Telegramm oder Datenpakete bezeichnet - über Funkkanäle. Abhängig von der Funktion und Konfiguration der Geräte können dabei unterschiedliche Kanäle verwendet werden. Bestimmte Geräte sind in der Lage, auf mehreren oder auch allen verfügbaren Kanälen zu senden und/oder zu empfangen, während andere beim Empfangen und/oder Senden auf einen oder mehrere andere Kanäle beschränkt sind.

Der hier offenbarten Erfindung liegt die Aufgabe zugrunde, eine effiziente Kommunikation zwischen Geräten zu ermöglichen, die auf unterschiedlichen Kanälen senden und empfangen.

Eine Ausführungsform der Erfindung betrifft ein Verfahren zur Ausführung durch Geräte in einem Netzwerk. Das Netzwerk umfasst mindestens drei Geräte, von denen ein erstes Gerät einen ersten Funkkanal, ein zweites Gerät den ersten Funkkanal und einen zweiten Funkkanal und ein drittes Gerät lediglich den zweiten Funkkanal verwendet. Das erste Gerät sendet eine Nachricht auf dem ersten Funkkanal. Die Nachricht enthält eine Zieladresse, die ein oder mehrere andere Zielgeräte in dem Netzwerk bezeichnet. Das zweite Gerät fällt unter diese Zieladresse. Die Zieladresse kann auch eine Broadcast- oder Multicastadresse oder sonstige Gruppenadresse sein.

Zielgeräte, die den oder die gleichen Kanäle wie das erste Gerät verwenden, empfangen die Nachricht ohne weiteres. Andere Geräte, die die Nachricht empfangen, ohne adressiert zu sein, können die Übermittlung der Nachricht unterstützen, wenn sie beide Funkkanäle unterstützen. Empfängt ein solches (drittes) Gerät die Nachricht, liest es zunächst die Zieladresse aus der Nachricht. Das Gerät prüft anschließend anhand einer lokal oder zentral gespeicherten Datenstruktur, welcher Kanal mit diesem Gerät assoziiert ist.

Die Datenstruktur kann lokal auf dem Gerät oder auch auf jedem Gerät gespeichert sein, oder kann alternativ zentral auf einem einzigen Gerät oder Server gespeichert sein, das zu dem Zweck der Prüfung von dem jeweiligen Gerät kontaktiert wird. Die Datenstruktur ist vorab mit Einträgen der Geräte und gegebenenfalls deren Kanälen versehen. In einer Ausführungsform kann die Datenstruktur für jedes Gerät in dem Netzwerk die von diesem Gerät unterstützten Kanäle enthalten. Alternativ kann die Datenstruktur lediglich diejenigen Geräte enthalten, die nur einen einzigen Kanal unterstützen. Als weitere Alternative kann die Datenstruktur lediglich die Adressen von Geräten enthalten, die nur einen einzigen Kanal unterstützen, und auf die Angabe des konkreten Kanals verzichten. Die letztere Alternative eignet sich insbesondere, wenn lediglich zwei Kanäle verwendet werden.

Angaben über Kanäle in der Datenstruktur können entweder Kanalbezeichner sein, die den Teilnehmern des Netzwerks bekannt sind, oder können Frequenzbereiche in einem vorbestimmten Format angeben. Ob ein Gerät einen bestimmten Kanal unterstützt, kann in diesem Fall durch einen Vergleich der Frequenzbereiche geprüft werden; liegt ein Frequenzbereich innerhalb eines unterstützten Frequenzbereichs, so wird er durch das betreffende Gerät unterstützt.

Enthält die Datenstruktur für das Zielgerät oder die Zielgeräte einen oder mehrere Einträge, so liest das dritte Gerät Angaben über den oder die von den Zielgeräten verwendeten Kanäle. Das Gerät sendet die Nachricht selbst, wobei es den oder die angegebenen Kanäle verwendet. In Ausführungsformen mit lediglich zwei Kanälen prüft das dritte Gerät lediglich, ob das Zielgerät in der Datenstruktur aufgeführt sind, und sendet in diesem Fall die Nachricht auf dem zweiten Kanal. Ist das Zielgerät in der Datenstruktur nicht enthalten, verzichtet das dritte Gerät auf Maßnahmen zum Senden der Nachricht. In diesem Fall kann davon ausgegangen werden, dass das Zielgerät den ersten Kanal ohnehin unterstützt und die Nachricht ohne weitere Maßnahme durch das dritte Gerät empfängt.

Sind die Datenstrukturen lokal auf den einzelnen Geräten gespeichert, so können sie sich geringfügig von Gerät zu Gerät unterscheiden. Beispielsweise kann die Datenstruktur auf jedem Gerät in einer Ausführungsform ohne Eintrag für das jeweilige Gerät auskommen, da den Geräten ihre eigenen Kanäle auch auf anderem Wege bekannt sein können, beispielsweise als feste Einstellung durch den Hersteller.

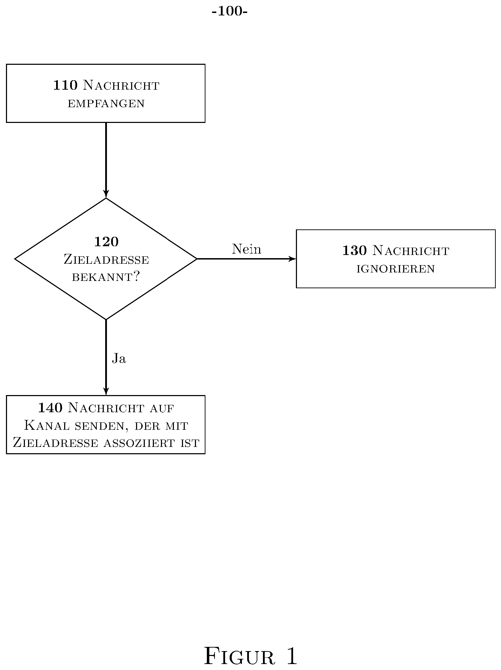

Figur 1 zeigt ein Verfahren 100 zum Bearbeiten einer Nachricht, die von einem ersten Gerät per Funk an ein zweites Gerät gesendet wird. Das Verfahren 100 wird durch ein drittes Gerät ausgeführt. Das dritte Gerät ist eingerichtet, zwei unterschiedliche Funkkanäle zu verwenden.

In Schritt 110 erkennt das dritte Gerät eine Nachricht auf einem ersten Funkkanal. Die Nachricht enthält eine erste Adresse des ersten Geräts sowie eine zweite Adresse des zweiten Geräts. Das dritte Gerät liest zumindest die zweite Adresse und prüft, ob diese Adresse in einer vorgegebenen Datenstruktur gespeichert ist. Wird kein entsprechender Eintrag vorgefunden, ignoriert das dritte Gerät die Nachricht in Schritt 150. Wird ein entsprechender Eintrag vorgefunden, liest das dritte Gerät mit der Adresse in der Datenstruktur gespeicherte Angaben über einen Funkkanal, der von dem Gerät verwendet wird, oder schließt allein aus der Angabe des zweiten Geräts in der Datenstruktur, dass das Gerät lediglich auf einem zweiten Funkkanal kommuniziert. In Schritt 140 sendet das dritte Geräte die Nachricht auf dem zweiten Funkkanal, wenn die Prüfung in Schritt 120 positiv verläuft.

Bei dieser Ausführungsform wird das Netzwerk vorzugsweise über insgesamt zwei Kanäle betrieben. Wird bei Schritt 120 kein Eintrag für das zweite Gerät gefunden, kann davon ausgegangen werden, dass das zweite Gerät mit dem (standardmäßigen) ersten Kanal betrieben wird. In diesem Fall kann die Nachricht von dem dritten Gerät ignoriert werden, da die Nachricht bereits auf dem richtigen Kanal liegt und von dem zweiten Gerät ohne weiteres erkannt wird. In dieser Ausführungsform enthält die Datenstruktur also Einträge für alle Geräte, die den ersten Kanal nicht unterstützen und auf den zweiten Kanal angewiesen sind. In einer Ausführungsform kann daher auf die Angabe des zweiten Funkkanals in den Einträgen der Datenstruktur auch verzichtet werden. Ferner wird das Verfahren 100 nur auf solchen Geräten ausgeführt, die beide Kanäle unterstützen.

Die Erfindung ermöglicht somit mit einfachen Mitteln eine zuverlässige Kommunikation zwischen Geräten zu ermöglichen, die unterschiedliche Kanäle benutzen, und vermeidet auf Seiten der beteiligten Endgeräte (hier: erstes und zweites Gerät) jegliche Rücksichtnahmen auf unterschiedliche Kanäle beim Senden und Empfangen einer Nachricht.

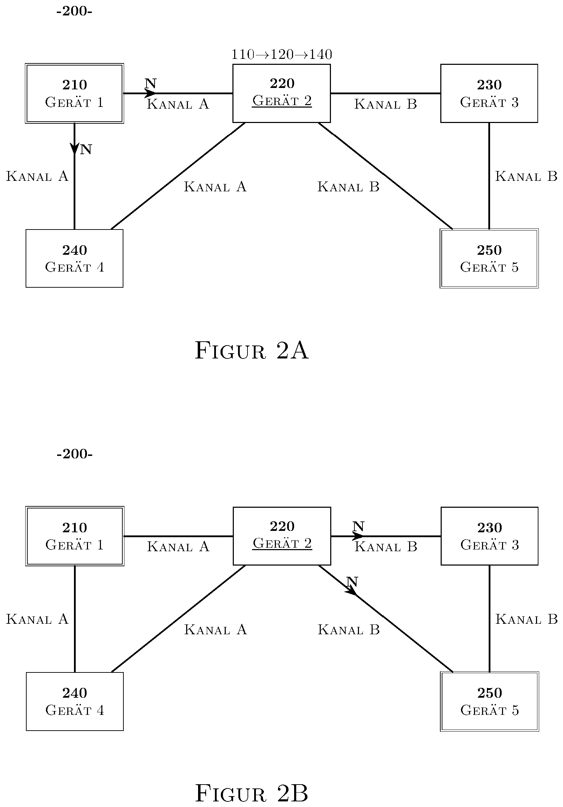

Figur 2A zeigt ein Anwendungsbeispiel des Verfahrens 100. Figur 2A zeigt ein Netzwerk oder System 200, das die Geräte 210, 220, 230, 240 und 250 umfasst. Erfindungsgemäße Netzwerke können weitere oder auch weniger Geräte als gezeigt enthalten. Absendergerät 210 und Zielgerät 250 sind doppelt umrandet. Die Bezeichnungen der Geräte, die mehr als einen Kanal unterstützen, hier Gerät 220, sind unterstrichen. Kanten zwischen zwei Geräten zeigen an, dass diese Geräte beide einen oder mehrere Kanäle gemeinsam unterstützen. An jeder Kante sind die von den miteinander verbundenen Geräten unterstützten Kanäle angegeben. Die von einem Gerät ausgeführten Schritte des Verfahrens 100 sind in Kurzform über oder unter dem Gerät dargestellt. Das Senden einer Nachricht ist durch einen Pfeil mit der Bezeichnung N dargestellt.

Das Gerät 210 (erstes Gerät, Absendergerät) versendet eine Nachricht an das Gerät 250 (zweites Gerät, Zielgerät). In dem Netzwerk werden die Kanäle A und B verwendet, die sich in ihren Frequenzen unterscheiden. Die Geräte 210 und 240 kennen/unterstützen lediglich den ersten Kanal A und können auf diesem Kanal somit senden und empfangen. Die Geräte 230 und 250 kennen lediglich den zweiten Kanal B. Das Gerät 220 kennt beide Kanäle A und B. Eine Nachricht, die von Gerät 210 auf Kanal A versendet wird, kann von den Geräten 220 und 240 empfangen werden, nicht jedoch von einem der anderen Geräte; eine Nachricht, die von Gerät 220 auf Kanal A versendet wird, kann von den Geräten 210 und 240 empfangen werden; eine Nachricht, die von Gerät 220 auf Kanal B versendet wird, kann von den Geräten 230 und 250 empfangen werden, etc.

Die Figur 2A dient lediglich der Verdeutlichung einer beispielhaften Netzwerktopologie und nicht etwa der Veranschaulichung von Reichweiten. Würde das Gerät 250 den Kanal A unterstützen, könnte es somit eine Nachricht, die von Gerät 210 auf diesem Kanal gesendet wird, ohne weiteres empfangen; es wird vereinfachend davon ausgegangen, dass jedes Gerät in des Netzwerks 200 im Sendebereich aller Kanäle des Netzwerks steht, auch wenn es nicht sämtliche Kanäle unterstützt.

Das Gerät 220 ist eingerichtet, auf eine oder mehrere der vorgenannten Datenstrukturen zuzugreifen, um die Eigenschaften von Zielgeräten zu prüfen. In einer Ausführungsform existiert eine einzige Datenstruktur, die zentral gespeichert ist, oder zwei identische Datenstrukturen, die lokal lediglich auf dem oder den dritten Geräten gespeichert sind, hier also Gerät 220. Die Datenstruktur kann entweder sämtliche Geräte mit jeweils unterstützten Kanälen enthalten, oder kann lediglich die Namen der Geräte (ohne Kanalangabe), die nur den Kanal B unterstützen, enthalten. Als weitere Alternative können auf dem Gerät 220 zwei Datenstrukturen vorliegen, von denen die erste die Geräte, die nur Kanal A unterstützen, und die zweite die Geräte, die nur Kanal B unterstützen, enthält.

In einem ersten Beispiel kann die Datenstruktur in dem Netzwerk 200 beispielsweise folgendes Format aufweisen:
210, A
220, A
220, B
230, B
240, A
250, B

Alternativ kann eine erste Datenstruktur folgendes Format aufweisen:
210, A
220, A
240, A

Eine zweite Datenstruktur kann folgendes Format aufweisen:
220, B
230, B
250, B

Als weitere Alternative kann die Datenstruktur lediglich diejenigen Geräte aufführen, die nur den Kanal B unterstützen:
220,
230,
250

Hierbei stehen die Bezugsziffern 210, 220 etc. für die Adressen der Geräte und die Buchstaben A und B für die jeweils unterstützten Kanäle.

Das erste Gerät 210 sendet seine Nachricht N auf dem einzigen von diesem Gerät unterstützen Kanal A. Die Nachricht N ist an das Gerät 250 adressiert. Gerät 250 unterstützt lediglich Kanal B und empfängt diese Sendung daher nicht. Jedoch wird die Nachricht N sowohl von Gerät 220 als auch von Gerät 250 empfangen, da beide den Kanal A unterstützen. Das Gerät 230 empfängt die Nachricht ebenfalls nicht, da es lediglich Kanal B unterstützt.

Das Gerät 220 unterstützt beide Kanäle und führt zunächst die Schritte 110 und 120 des Verfahrens 100 aus, indem es die Zieladresse der Nachricht N einliest und prüft, welchen Kanal das Zielgerät unterstützt. Die Prüfung des Zielgeräts kann durch Nachschlagen lediglich der Zieladresse in der Datenstruktur erfolgen, um festzustellen, dass dieses Gerät lediglich den Nicht-standardmäßigen-Kanal B unterstützt, oder kann neben der Zieladresse auch den Kanal aus der Datenstruktur lesen. Mit dem oben angegebenen Beispiel der Datenstruktur ermittelt das Gerät 220 die Zeile "250, B", und stellt somit fest, dass das Zielgerät zur Gruppe der Geräte zählt, die lediglich den Kanal B unterstützen. Das Gerät 220 versendet die Nachricht in Schritt 140 des Verfahrens 100 auf Kanal B.

Die erläuterte Prüfung erfolgt lediglich dann, wenn eine empfangene Nachricht nicht an das empfangende Gerät adressiert ist. Somit kann Schritt 110 ergänzt werden um eine weitere Prüfung, ob bereits das empfangende Gerät das Zielgerät ist. In diesem Fall verzichtet das Gerät auf jede weitere Maßnahme und verarbeitet die Nachricht selbst. Im vorliegenden Fall ist das Gerät 220 nicht selbst adressiert, so dass es die Nachricht auf dem anderen Kanal weitersendet.

Figur 2B zeigt das Netzwerk 200, nachdem das Gerät 220 die Nachricht erneut versendete. Die Nachricht kann lediglich von den Geräten 230 und 250 empfangen werden.

Das Gerät 230 empfängt die Nachricht N, ist jedoch nicht als drittes Gerät konfiguriert, da es lediglich einen Kanal unterstützt. Das Verfahren 100 wird im vorliegenden Beispiel lediglich auf Geräten ausgeführt, die mehr als einen Kanal unterstützen. Somit liest das Gerät 230 die Nachricht N, stellt fest, dass es selbst nicht das Zielgerät ist, und ignoriert die Nachricht. Das Gerät 250 empfängt die Nachricht N ebenfalls, liest dessen Zieladresse und verarbeitet die Nachricht.

In weiteren Ausführungsformen der Erfindung kann das beschriebene Verfahren weitergebildet werden, um eine Ausführung des Verfahrens durch jedes Gerät in einem Netzwerk zu ermöglichen, und nicht lediglich durch Geräte, die mehr als einen Kanal unterstützen oder die vorab manuell entsprechend konfiguriert wurden. Die Inbetriebnahme und Konfiguration eines Netzwerks wird hierdurch vereinfacht, da das gleiche Verfahren einfach auf jedem Gerät installiert und gegebenenfalls ausgeführt wird.

Die erwähnte Weiterbildung umfasst eine Änderung der bisher erläuterten Schritte 120 und 140: Es wird nunmehr geprüft, ob ein Zielgerät den konkreten Kanal unterstützt, auf dem eine Nachricht an einem ausführenden Gerät empfangen wurde. Unterstützt das Zielgerät den Empfangskanal eines solchen Geräts nicht, sendet dieses Gerät die Nachricht auf einem Kanal des Zielgeräts, wenn das (ausführende) Gerät diesen Kanal unterstützt. Somit kann das Verfahren auf jedem Gerät ablaufen, unabhängig davon, ob das Gerät überhaupt beide Kanäle unterstützt. Das Verfahren ist im Übrigen identisch zu dem Verfahren 100 und dessen oben beschriebenen Varianten.

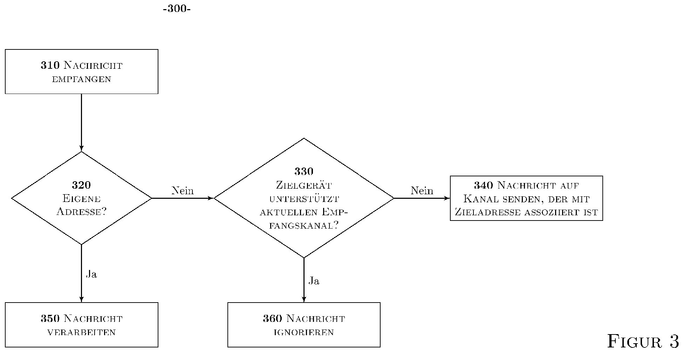

Figur 3 zeigt ein Verfahren 300 zur Ausführung auf jedem Gerät in einem Netzwerk. In Schritt 310 empfängt das Gerät eine Nachricht. In Schritt 320 prüft das Gerät, ob die Nachricht an dieses Gerät adressiert ist. Ist dies der Fall, verarbeitet das Gerät die Nachricht in Schritt 350.

Ist das ausführende Gerät nicht der Adressat, prüft es in Schritt 330, ob das Zielgerät den Kanal unterstützt, auf dem die Nachricht empfangen wurde. Dies kann durch eine der bereits beschriebenen Maßnahmen erfolgen, beispielsweise durch Einlesen von Kanalinformationen aus einer Datenstruktur. Unterstützt das Zielgerät den aktuellen Empfangskanal nicht, sendet das ausführende Gerät in Schritt 340 die Nachricht auf dem anderen Kanal; andernfalls ignoriert das Gerät die Nachricht in Schritt 360.

Das Verfahren 300 erlaubt mehrere vermittelnde dritte Geräte in einem Netzwerk und beugt zugleich der Gefahr vor, dass diese sich gegenseitig die gleiche Nachricht immer zusenden. Da das Netzwerk nur auf zwei Kanälen arbeitet, erfolgt eine Weitersendung immer auf einem Kanal, den auch das Zielgerät unterstützt. Wird eine solche weitergesendete Nachricht von einem anderen dritten Gerät empfangen, so stellt dieses in Schritt 330 fest, dass diese Nachricht bereits auf dem richtigen Kanal des Zielgerätes liegt, und verzichtet auf ein erneutes Senden der Nachricht.

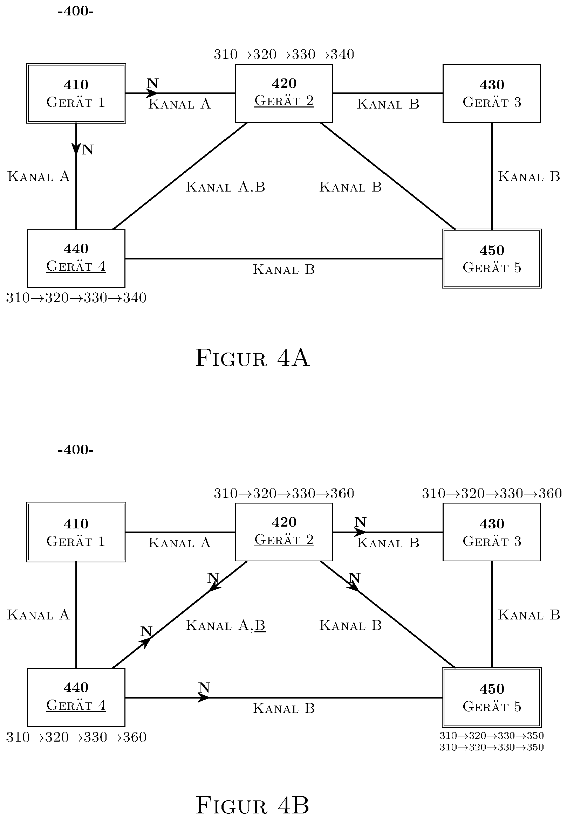

Figur 4A zeigt ein Anwendungsbeispiel für das Verfahren 300. Figur 4A zeigt die Geräte 410, 420, 430, 440 und 450 in einem Netzwerk. Das Gerät 410 kennt/unterstützt lediglich Kanal A. Die Geräte 430 und 450 kennen lediglich den Kanal B. Die Geräte 420 und 440 kennen sowohl Kanal A als auch Kanal B. Jedes der Geräte ist eingerichtet, bei Empfang einer Nachricht das Verfahren 300 auszuführen.

Das Gerät 410 sendet eine Nachricht N, die an das Gerät 450 adressiert ist. Die Nachricht wird auf Kanal A von den Geräten 420 und 440 empfangen, die jeweils in Schritt 310 Adressdaten aus der Nachricht lesen. Das Gerät 440 führt die Schritte 320, 330 und 340 aus: Die Nachricht ist nicht an das Gerät 440 adressiert; das Zielgerät 450 unterstützt laut Datenstruktur nicht den Empfangskanal A; das Gerät 440 sendet somit die Nachricht auf dem Kanal B, der mit dem Gerät 450 assoziiert ist. Analog führt das Gerät 420 die Schritte 320, 330 und 340 aus: Das Gerät 420 sendet die Nachricht auf Kanal B.

Figur 4B zeigt ein nachfolgendes Stadium des Verfahrens.

Das Gerät 440 empfängt die Nachricht N von Gerät 420 auf Kanal B in Schritt 310, erkennt in Schritt 320, dass diese an ein anderes Gerät adressiert ist, und stellt in Schritt 330 anhand der Datenstruktur fest, dass das Zielgerät den Empfangskanal B selbst unterstützt. Somit verzichtet das Gerät 440 auf jede weitere Maßnahme und wechselt zu Schritt 360.

Analog empfängt das Gerät 420 die Nachricht N von Gerät 440 auf Kanal B in Schritt 310, erkennt in Schritt 320, dass diese an ein anderes Gerät adressiert ist, und stellt in Schritt 330 anhand der Datenstruktur fest, dass das Zielgerät den Empfangskanal B selbst unterstützt. Somit verzichtet auch das Gerät 420 auf jede weitere Maßnahme und ignoriert die Nachricht in Schritt 360. Das Gerät 430 empfängt die Nachricht N ebenfalls auf Kanal B und verfährt analog zu den Geräten 440 und 420.

Das Gerät 450 empfängt die Nachricht N in Schritt 310 auf Kanal B, wo sie sowohl von Gerät 420 als auch von Gerät 440 versendet wurde. Das Gerät 450 erkennt in Schritt 320 jeweils, dass es das Zielgerät für die Nachricht ist, und verarbeitet diese in Schritt 350. Das Gerät 450 führt das Verfahren 300 in dieser Ausführungsform für jede empfangene Nachricht N einmal aus. Um eine mehrfache Verarbeitung der identischen Nachricht N zu vermeiden, kann das Gerät 450 in einer Ausführungsform protokolleigene Maßnahmen anwenden oder aber für jede empfangene Nachricht, die an dieses Gerät adressiert ist, einen Hashwert erzeugen, diesen mit zuvor gespeicherten Hashwerten vergleichen, und die Nachricht nur dann verarbeiten, wenn der Hashwert neu ist. In diesem Fall wird der neue Hashwert lokal gespeichert. Im vorliegenden Fall würde das Gerät 450 also lediglich die erste der beiden identischen Nachrichten N verarbeiten und die zweite ignorieren. Alternativ zur Erzeugung von Hashwerten kann auch ein eindeutiger Bezeichner aus der Nachricht gelesen werden.

Die bisher beschriebenen Verfahren können weitergebildet werden, indem sie nicht nur durch jedes Gerät in einem Netzwerk ausführbar sind, sondern auch einen Betrieb des Netzwerks mit einer beliebigen Anzahl von Kanälen ermöglichen.

Werden in einem Netzwerk mehr als zwei Kanäle verwendet, so können Situationen entstehen, in denen zwei Geräte die gleiche Nachricht immer wieder erneut über alternierende Kanäle versenden. Solche Situationen können beispielsweise entstehen, wenn keines der betreffenden Geräte den oder die Kanäle des Zielgeräts unterstützt und daher grundsätzlich eine erneute Versendung der Nachricht erforderlich wäre. Um diese Situationen zu vermeiden, wird das Verfahren aus den Figuren 3 und 4A/4B ergänzt um eine Prüfung, ob eine Nachricht bereits zuvor durch das ausführende Gerät versendet wurde. Diese Prüfung kann beispielsweise anhand von Hashwerten vorgenommen werden, die von jeder empfangenen Nachricht erzeugt und mit bereits gespeicherten Hashwerten verglichen werden. Existiert bereits ein identischer Hashwert, ignoriert das Gerät die Nachricht. Andernfalls speichert es en Hashwert und versendet die Nachricht erneut. werden. Wiederum können anstelle von Hashwerten auch eindeutige Bezeichner verwendet werden, die beispielsweise in den Nachrichten bereits bei deren Erzeugung im Absendergerät eingefügt wurden.

Der Vergleich der Hashwerte oder Bezeichner kann beispielsweise als letzter Schritt vor dem erneuten Versenden einer Nachricht durch ein Gerät erfolgen. Die Erfindung verhindert auf diese Weise Endlosschleifen, in denen eine Nachricht immer wieder zwischen bestimmten Geräten hin- und hergesendet wird.

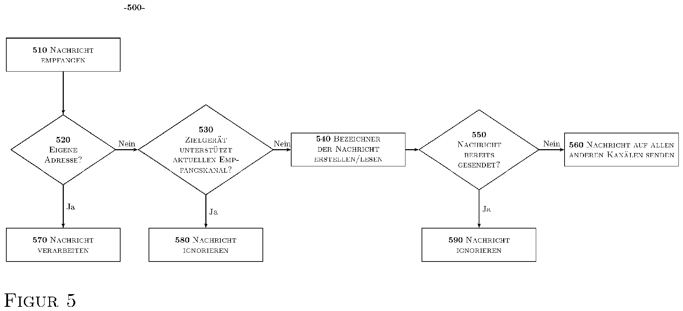

Figur 5 zeigt ein Verfahren 500, das durch jedes Gerät in einem Netzwerk ausgeführt werden kann. In Schritt 510 empfängt das Gerät eine Nachricht und prüft in Schritt 520, ob es ein Adressat der Nachricht ist. In diesem Fall verarbeitet das Gerät die Nachricht in Schritt 570. Das Gerät kann dabei einen Hashwert aus der Nachricht erzeugen und diesen mit zuvor gespeicherten Hashwerten vergleichen, um auszuschließen, dass die Nachricht bereits zuvor verarbeitet wurde. Ist der Hashwert nicht bekannt, wird er gespeichert und die Nachricht verarbeitet; andernfalls wird die Nachricht ignoriert. Anstelle eines Hashwerts kann auch ein in der Nachricht enthaltener eindeutiger Bezeichner verwendet werden. Das Erstellen und Vergleichen oder Speichern von Hashwerten oder Bezeichnern kann alternativ bereits vor Schritt 520 in Schritt 510 durchgeführt werden.

Ist das ausführende Gerät kein Adressat der Nachricht, prüft es in Schritt 530, ob das Zielgerät der Nachricht den Kanal, auf dem die Nachricht von dem ausführenden Gerät empfangen wurde, unterstützt. Ist dies der Fall, ignoriert das Gerät in Schritt 580 die Nachricht, da davon auszugehen ist, dass das Zielgerät die Nachricht ohne weiteres empfängt. Die Prüfung in Schritt 530 erfolgt, wie bereits beschrieben, anhand einer lokalen oder zentralen Datenstruktur. Anders als in einigen bisher beschriebenen Ausführungsformen enthält die Datenstruktur neben Bezeichnern (Adressen) der Geräte in jedem Fall auch die von diesen Geräten unterstützten Kanäle; da die vorliegende Ausführungsform auf beliebige Anzahlen von Kanälen gerichtet ist, genügt eine einfache Unterscheidung in der Datenstruktur (Aufführen oder Weglassen lediglich des Gerätebezeichners) betreffend Unterstützen eines gegebenen Kanals nicht.

Unterstützt das Zielgerät den Empfangskanal nicht, kann das ausführende Gerät in Schritt 540 einen Hashwert erzeugen oder einen eindeutigen Bezeichner aus der Nachricht lesen, falls dies nicht bereits in Schritt 520 vorgenommen wurde. Diesen Wert vergleicht das Gerät in Schritt 550 mit zuvor gespeicherten Werten, um festzustellen, ob die Nachricht bereits zuvor durch dieses Gerät empfangen beziehungsweise gesendet wurde. Findet sich der erzeugte Wert unter den gespeicherten Werten, ignoriert das ausführende Gerät die Nachricht in Schritt 590. Andernfalls wird der Wert gemeinsam mit den anderen Werten gespeichert, und das Gerät versendet die Nachricht auf allen von ihm unterstützten Kanälen. In einer Ausführungsform kann der Kanal, auf dem die Nachricht von dem Gerät empfangen wurde, hiervon ausgenommen werden. Vorteilhafterweise werden die schritte 540, 550, 590 entweder bereits in Schritt 520 oder aber, wie hier gezeigt, zwischen Schritt 530 und 560 ausgeführt. Alternativ können die Schritte 540, 550, 590 auch sowohl zwischen Schritt 520 und 570 als auch zwischen Schritt 530 und 560 ausgeführt werden.

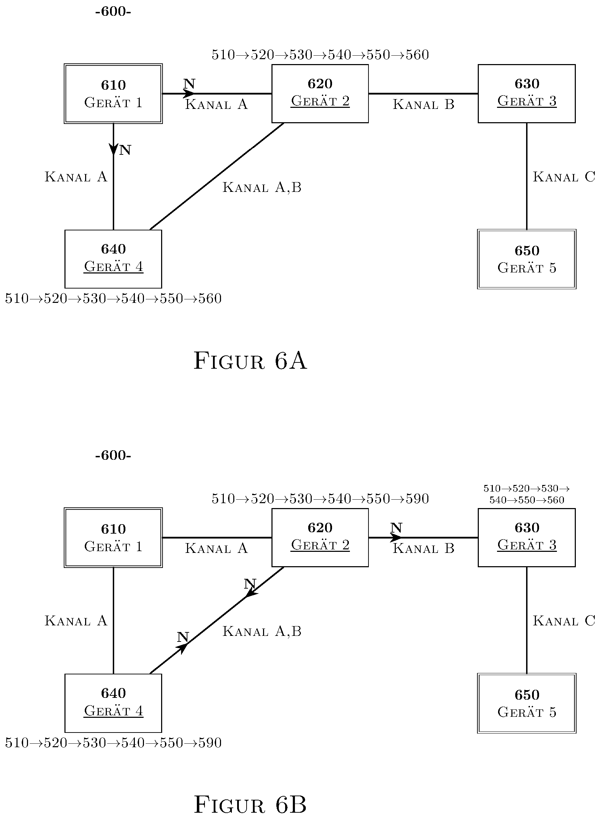

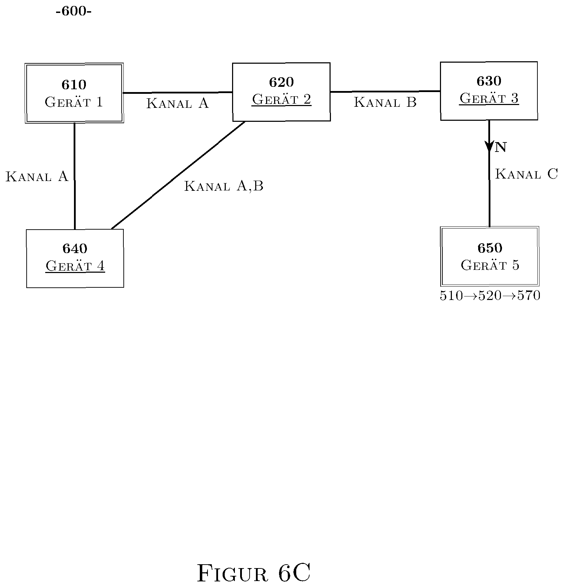

Figur 6A zeigt ein Netzwerk 600 mit Geräten 610, 620, 630, 640, 650. Das Gerät 410 unterstützt lediglich den Kanal A. Die Geräte 620 und 640 unterstützen sowohl den Kanal A als auch den Kanal B. Das Gerät 630 unterstützt die Kanäle B und C. Das Gerät 650 unterstützt lediglich den Kanal C. Eine Nachricht N soll von Gerät 610 an Gerät 650 übermittelt werden.

Das Gerät 610 sendet die Nachricht N auf dem Kanal A. Die Geräte 620 und 640 führen unabhängig voneinander das Verfahren 500 aus, wobei sie die Nachricht in Schritt 510 empfangen, in Schritt 520 feststellen, dass die Nachricht nicht an sie adressiert ist, und in Schritt 530 anhand der Datenstruktur feststellen, dass das Zielgerät 650 den Empfangskanal A nicht unterstützt. Daraufhin ermittelt jedes der beiden Geräte in Schritt 540 einen Hashwert oder sonstigen eindeutigen Bezeichner der Nachricht und prüft mittels Vergleich mit früher gespeicherten Werten, ob dieser bereits zuvor durch das jeweilige Gerät verwendet wurde. Im vorliegenden Fall entscheiden beide Geräte, dass sie die Nachricht N zum ersten Mal erhalten. Jedes dieser beiden Geräte sendet die Nachricht im vorliegenden Beispiel auf allen von ihm unterstützten Kanälen mit Ausnahme des Empfangskanals A, hier also auf Kanal B. Wie bereits erläutert, können die Schritte 540 und 550 auch bereits unmittelbar nach Schritt 510 ausgeführt werden.

Figur 6B zeigt das Netzwerk 600 nach dem Versenden der Nachricht N durch die Geräte 620 und 640, in beiden Fällen auf Kanal B. Das Gerät 640 empfängt die Nachricht in Schritt 510 und führt die bereits beschriebenen Schritte 520, 530, 540 und 550 aus. Das Gerät 640 erkennt anhand eines Bezeichners oder Hashwerts der Nachricht in Schritt 550, dass die Nachricht dort bereits versendet worden war, und ignoriert die Nachricht in Schritt 590. Analog empfängt das Gerät 620 die Nachricht in Schritt 510, führt die Schritte 520, 530, 540 und 550 aus und ignoriert die Nachricht ebenfalls, Schritt 590.

Das Gerät 630 empfängt die Nachricht N in Schritt 510 auf Kanal B und führt die Schrittfolge 520, 530, 540 und 550 aus. In Schritt 550 erzeugt das Gerät 630 einen Hashwert der Nachricht oder entnimmt dieser einen Bezeichner und vergleicht diesen mit zuvor gespeicherten Werten. Da die Nachricht N an dem Gerät 630 zum ersten Mal empfangen wird, sendet das Gerät 630 die Nachricht auf allen von ihm unterstützten Kanälen mit Ausnahme des Kanals B, auf dem es die Nachricht N empfing. Diese Kanäle umfassen als einziges den Kanal C. Zuletzt empfängt das Gerät 650 die Nachricht in Schritt 510 auf Kanal C, erkennt in Schritt 520, dass die Nachricht an dieses Gerät adressiert ist, und verarbeitet die Nachricht in Schritt 570. Gegebenenfalls kann das Gerät 650 ebenfalls einen Hashwert der Nachricht erzeugen oder einen Bezeichner auslesen und diesen mit zuvor gespeicherten Werten vergleichen, um sicherzustellen, dass die Nachricht zum ersten Mal empfangen wird. Im vorliegenden Fall existiert kein entsprechender früherer Wert, so dass das Gerät 650 die Nachricht als Zielgerät verarbeitet.

Die hier beschriebenen Ausführungsformen lassen sich in unterschiedlichen Protokollen implementieren. Ein solches Protokoll ist der KNX-Standard. Hierbei können als Funkkanäle die aus KNX bekannten Fast- und Slow-Kanäle (KNX-RF Multi) sowie der ReadyKanal verwendet werden. Allgemein bedeutet die Verwendung unterschiedlicher Kanäle im Kontext dieser Erfindung, dass Kanäle mit unterschiedlichen Frequenzen und/oder unterschiedlicher Kodierung auf der gleichen Frequenz verwendet werden. Insbesondere können die Kanäle so eingerichtet sein, dass sich die Frequenzen unterschiedlicher Kanäle nicht überlappen.

Ausführungsformen der Erfindung umfassen neben den beschriebenen Systemen und Verfahren auch computerlesbare Medien mit darauf gespeicherten Befehlen, die bei ihrer Ausführung durch einen Prozessor die hier beschriebenen Verfahren durchführen.

Die technische Wirkung der hier beschriebenen Ausführungsformen umfasst eine zuverlässige und effiziente Kommunikation zwischen Geräten in einem Netzwerk, die unterschiedliche Funkkanäle verwenden. Bestimmte Ausführungsformen ermöglichen zudem eine einfache Installation, da die entsprechenden Verfahren auf jedem Gerät ausgeführt werden können unabhängig davon, ob ein Gerät als Zielgerät oder als Vermittler (Weitersenden der Nachricht auf anderem Kanal) dient; dies macht die Erfindung besonders flexibel, da das gleiche Gerät je nach Situation die Rolle des Vermittlers oder die des Zielgeräts ausüben kann. Für den Absender und Empfänger einer Nachricht ist das Verfahren besonders effizient, da Absender und Adressaten keine besonderen Vorkehrungen für die Zustellung der Nachricht zu treffen brauchen.

## Patentansprüche

1. Verfahren, umfassend:
Senden einer Nachricht durch ein erstes Gerät in einem Funknetzwerk auf einem ersten Funkkanal, wobei die Nachricht eine erste Adresse des ersten Geräts und eine zweite Adresse eines zweiten Geräts oder eine Gruppenadresse enthält, wobei das Funknetzwerk nach dem KNX-Protokoll arbeitet;
Empfangen (310) der Nachricht durch ein drittes Gerät in dem Funknetzwerk;
Auslesen der zweiten Adresse, Prüfen (320), ob die Nachricht an das dritte Gerät adressiert ist;
falls die Nachricht an das dritte Gerät adressiert ist, Verarbeiten (350) der Nachricht durch das dritte Gerät, und, falls die Nachricht nicht an das dritte Gerät adressiert ist, Prüfen (330) anhand einer Datenstruktur, ob das zweite Gerät den ersten Funkkanal unterstützt;
falls das zweite Gerät den ersten Funkkanal unterstützt, Ignorieren (360) der Nachricht durch das dritte Gerät, und, falls das zweite Gerät den ersten Funkkanal nicht unterstützt, Auslesen eines zweiten Funkkanals, der in der Datenstruktur der zweiten Adresse zugeordnet ist, und Senden (340) der Nachricht auf dem zweiten Funkkanal, wobei das dritte Gerät sowohl den ersten als auch den zweiten Funkkanal unterstützt.

2. Verfahren nach Anspruch 1, wobei der erste und der zweite Funkkanal unterschiedliche Frequenzen umfassen, insbesondere wobei sich die Frequenzen des ersten mit dem zweiten Funkkanal nicht überlappen.

3. Verfahren nach Anspruch 1 oder 2, wobei der erste Funkkanal im Fast-Modus und der zweite Funkkanal im Slow-Modus oder im Ready-Modus arbeitet.

4. Verfahren nach einem der vorstehenden Ansprüche, wobei die zweite Adresse Teil eines jeweiligen KNX-Datenpunkts sind, der neben der jeweiligen Adresse eine Funktion enthält, die durch das Zielgerät ausgeführt wird, wenn dieses die jeweilige Nachricht erhält.

5. Verfahren nach einem der vorstehenden Ansprüche, wobei die Nachrichten Telegramme nach dem KNX-Protokoll umfassen.

6. System, umfassend:
ein erstes Gerät, ein zweites Gerät und ein drittes Gerät, die zur Kommunikation in einem Funknetzwerk eingerichtet sind, wobei das Funknetzwerk nach dem KNX-Protokoll arbeitet;
wobei das erste Gerät auf einem ersten Funkkanal und das zweite Gerät auf einem zweiten Funkkanal in dem Funknetzwerk kommuniziert und das dritte Gerät eingerichtet ist, sowohl den ersten als auch den zweiten Funkkanal zu verwenden;
wobei das erste Gerät eingerichtet ist, eine Nachricht auf dem ersten Funkkanal zu senden, wobei die Nachricht eine erste Adresse des ersten Geräts und eine zweite Adresse des zweiten Geräts enthält;
wobei das dritte Gerät eingerichtet ist, die Nachricht zu empfangen (310), die zweite Adresse auszulesen, zu prüfen (320), ob die Nachricht an das dritte Gerät adressiert ist, und, falls die Nachricht an das dritte Gerät adressiert ist, die Nachricht zu verarbeiten (350), und, falls die Nachricht nicht an das dritte Gerät adressiert ist, anhand einer Datenstruktur zu prüfen (330), ob das zweite Gerät den ersten Funkkanal unterstützt, und, falls das zweite Gerät den ersten Funkkanal unterstützt, die Nachricht zu ignorieren (360), und, falls das zweite Gerät den ersten Funkkanal nicht unterstützt, den zweiten Funkkanal des zweiten Geräts auszulesen und die Nachricht auf dem zweiten Funkkanal zu senden (340).

7. System nach Anspruch 6, wobei der erste und der zweite Funkkanal unterschiedliche Frequenzen umfassen, insbesondere wobei sich die Frequenzen des ersten mit dem zweiten Funkkanal nicht überlappen und die Frequenzen des ersten Funkkanals niedriger sind als die Frequenzen des zweiten Funkkanals.

8. System nach Anspruch 6 oder 7, wobei der erste Funkkanal im SLOW-Modus und der zweite Funkkanal im FAST-Modus arbeitet.

9. System nach einem der Ansprüche 6 bis 8, wobei die erste und die zweite Adresse Teil eines jeweiligen KNX-Datenpunkts sind, der neben der jeweiligen Adresse eine Funktion enthält, die durch das Zielgerät ausgeführt wird, wenn dieses die jeweilige Nachricht erhält.

10. System nach einem der Ansprüche 6 bis 9, wobei die Nachrichten Telegramme nach dem KNX-Protokoll sind.

11. Computerlesbares Medium mit darauf gespeicherten Befehlen, die, wenn sie durch einen oder mehrere Prozessoren ausgeführt werden, dass Verfahren nach einem der Ansprüche 1 bis 5 ausführen.

## Claims

1. A method, comprising:
sending, by a first device in a radio network, a message on a first radio channel, wherein the message includes a first address of the first device and a second address of a second device or a group address, wherein the radio network operates according to the KNX protocol;
receiving (310), by a third device in the radio network, the message;
reading the second address, checking (320) whether the message is addressed to the third device;
if the message is addressed to the third device, processing (350), by the third device, the message, and if the message is not addressed to the third device, checking (330), according to a data structure, whether the second device supports the first radio channel;
if the second device supports the first radio channel, ignoring (360), by the third device, the message, and if the second device does not support the first radio channel, reading a second radio channel mapped in the data structure to the second address, and sending (340) the message on the second radio channel, wherein the third device supports both the first and second radio channels.

2. The method of claim 1, wherein the first and second radio channels comprise different frequencies, in particular wherein the frequencies of the first and second radio channels do not overlap.

3. The method of claim 1 or 2, wherein the first radio channel operates in fast mode and the second radio channel operates in slow mode or in ready mode.

4. The method of any one of the preceding claims, wherein the second address is part of a respective KNX data point that includes, in addition to the respective address, a function that is performed by the target device when it receives the respective message.

5. The method of any one of the preceding claims, wherein the messages comprise messages according to the KNX protocol.

6. A system, comprising:
a first device, a second device and a third device configured to communicate in a radio network, wherein the radio network operates according to the KNX protocol;
wherein the first device communicates on a first radio channel and the second device communicates on a second radio channel in the radio network, and the third device is configured to use both the first and second radio channels;
wherein the first device is configured to send a message on the first radio channel, wherein the message includes a first address of the first device and a second address of the second device;
wherein the third device is configured to receive (310) the message, read the second address, check (320) whether the message is addressed to the third device, and if the message is addressed to the third device, process (350) the message, and if the message is not addressed to the third device, check (330), according to a data structure, whether the second device supports the first radio channel, and if the second device supports the first radio channel, ignore (360) the message, and if the second device does not support the first radio channel, read the second radio channel of the second device, and send (340) the message on the second radio channel.

7. The system of claim 6, wherein the first and second radio channels comprise different frequencies, in particular wherein the frequencies of the first and second radio channels do not overlap and the frequencies of the first and second radio channels are lower than the frequencies of the second and second radio channels.

8. The system of claim 6 or 7, wherein the first radio channel operates in slow mode and the second radio channel operates in fast mode.

9. The system of any one of claims 6 to 8, wherein the first and second addresses are part of a respective KNX data point that includes, in addition to the respective address, a function that is performed by the target device when it receives the respective message.

10. The system of any one of claims 6 to 9, wherein the messages are messages according to the KNX protocol.

11. A computer-readable medium having stored thereon instructions that, when executed by one or more processors, perform the method of any one of claims 1 to 5.

## Revendications

1. Procédé, comprenant : l'envoi d'une message par un premier dispositif dans un réseau radio sur un premier canal radio, la message comprenant une première adresse du premier dispositif et une deuxième adresse d'un second dispositif ou une adresse de groupe, le réseau radio fonctionnant selon le protocole KNX ;
la réception (310) de la message par un troisième dispositif dans le réseau radio ;
la lecture de la deuxième adresse, la vérification (320) si la message est adressée au troisième dispositif ;
si la message est adressée au troisième dispositif, le traitement (350) de la message par le troisième dispositif, et, si la message n'est pas adressée au troisième dispositif, la vérification (330) à l'aide d'une structure de données si le second dispositif prend en charge le premier canal radio ; si le second dispositif prend en charge le premier canal radio, l'ignorance (360) de la message par le troisième dispositif, et, si le second dispositif ne prend pas en charge le premier canal radio, la lecture d'un second canal radio qui est associé à la deuxième adresse dans la structure de données, et l'envoi (340) de la message sur le second canal radio, le troisième dispositif prenant en charge à la fois le premier et le second canal radio.

2. Procédé selon la revendication 1, le premier et le second canal radio comprenant des fréquences différentes, en particulier les fréquences du premier canal radio ne chevauchant pas celles du second canal radio.

3. Procédé selon la revendication 1 ou 2, le premier canal radio fonctionnant en mode rapide et le second canal radio fonctionnant en mode lent ou en mode prêt.

4. Procédé selon l'une des revendications précédentes, la deuxième adresse faisant partie d'un point de données KNX respectif, qui, outre l'adresse respective, comprend une fonction qui est exécutée par le dispositif cible lorsque celui-ci reçoit la message respective.

5. Procédé selon l'une des revendications précédentes, les messages comprenant des télégrammes selon le protocole KNX.

6. Système, comprenant : un premier dispositif, un second dispositif et un troisième dispositif, qui sont configurés pour communiquer dans un réseau radio, le réseau radio fonctionnant selon le protocole KNX ;
le premier dispositif communiquant sur un premier canal radio et le second dispositif sur un second canal radio dans le réseau radio, et le troisième dispositif étant configuré pour utiliser à la fois le premier et le second canal radio ;
le premier dispositif étant configuré pour envoyer une message sur le premier canal radio, la message comprenant une première adresse du premier dispositif et une deuxième adresse du second dispositif ;
le troisième dispositif étant configuré pour recevoir (310) la message, lire la deuxième adresse, vérifier (320) si la message est adressée au troisième dispositif, et, si la message est adressée au troisième dispositif, traiter (350) la message, et, si la message n'est pas adressée au troisième dispositif, vérifier (330) à l'aide d'une structure de données si le second dispositif prend en charge le premier canal radio, et, si le second dispositif prend en charge le premier canal radio, ignorer (360) la message, et, si le second dispositif ne prend pas en charge le premier canal radio, lire le second canal radio du second dispositif et envoyer (340) la message sur le second canal radio.

7. Système selon la revendication 6, le premier et le second canal radio comprenant des fréquences différentes, en particulier les fréquences du premier canal radio ne chevauchant pas celles du second canal radio et les fréquences du premier canal radio étant inférieures à celles du second canal radio.

8. Système selon la revendication 6 ou 7, le premier canal radio fonctionnant en mode lent et le second canal radio fonctionnant en mode rapide.

9. Système selon l'une des revendications 6 à 8, la première et la deuxième adresse faisant partie d'un point de données KNX respectif, qui, outre l'adresse respective, comprend une fonction qui est exécutée par le dispositif cible lorsque celui-ci reçoit la message respective.

10. Système selon l'une des revendications 6 à 9, les messages étant des télégrammes selon le protocole KNX.

11. Support lisible par ordinateur comportant des instructions qui, lorsqu'elles sont exécutées par un ou plusieurs processeurs, exécutent le procédé selon l'une des revendications 1 à 5.
